# EUROPEAN PATENT SPECIFICATION

(11) **EP 3 152 435 B1**
(45) Date of publication and mention of the grant of the patent: **16.01.2019**
(21) Application number: 15728088.4
(22) Date of filing: 02.06.2015
(51) Int. Cl.: F03B 13/26, F16L 23/036, F03B 11/06

(54) **WATER CURRENT POWER GENERATION SYSTEMS**
WASSERSTROMERZEUGUNGSSYSTEME
SYSTÈMES DE GÉNÉRATION D'ÉNERGIE À PARTIR DE COURANT DE FOND

(30) Priority: 04.06.2014 GB 201409931
(43) Date of publication of application: 12.04.2017
(73) Proprietor: Tidal Generation Limited, Stafford, ST17 4LX (GB)
(72) Inventor: VIGARS, Paul, Bristol Bristol BS1 3AG (GB); RHYMES, Jonathan, Bristol Bristol BS1 3AG (GB); ADCOCK, Thomas, Bristol BS1 3AG (GB); SHEPPARD, James, Bristol Bristol BS1 3AG (GB)
(74) Representative: Brannen, Joseph Waclaw
(86) International application number: PCT/GB2015/051601
(87) International publication number: WO 2015/185913

(56) References cited:
- WO-A1-2014/072685
- GB-A- 2 504 516
- US-A1- 2010 129 221

## Description

The present invention relates to water current power generation systems, and in particular to such systems which employ removable power generation units.

### BACKGROUND TO THE INVENTION

It is widely known that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain. An example of such an underwater structure is given in US Patent Application Publication Number US 2010/0129221 A1.

In order to be economically practical, multiple water current turbine devices need to be deployed in a suitable area. For example, a tidal turbine farm may have tens to hundreds of turbines. The turbines are preferably arranged in an array having multiple rows of multiple turbines. The turbine array could be deployed in a tidal flow area, a river flow, an ocean current, or any other suitable water current area. Although it is preferable for the turbines to be arranged in an array, geography, bathymetry and other factors may mean that a turbine farm has another arrangement.

Such turbine equipment needs to be secured to the bed of a body of water, such as a sea, estuary or river. Conventional underwater turbines used to drive electrical generators are mounted on a horizontal rotational axis and require a significant amount of ancillary features, in order to maximise energy capture. One such feature that is essential for efficient energy generation is yaw capability: it must be possible to direct the turbine to the most effective orientation with respect to the direction of current flow at any particular time.

Installation, maintenance and servicing of underwater power generation apparatus, particularly in deep sea environments, are highly costly and time consuming procedures. It is therefore desirable to simplify the construction and deployment of underwater power generation apparatus, lowering capital cost and reducing the frequency with which in service intervention is required.

The requirement for provision of a retrievable power generation unit that can be oriented appropriately for the flow conditions leads to the need for a solution that can clamp the power generation unit to the support structure, whilst having respective positions for generation, removal and rotation.

It is desirable to provide a clamp solution that provides these three positions, whilst enabling desirably speedy transition between the positions.

### SUMMARY OF THE INVENTION

According to one aspect of the present invention, there is provided an underwater power generating system comprising a power generating apparatus and a support structure, the power generating apparatus having a mounting portion which is releasably engageable with a support portion of the support structure, the system further comprising a clamp arrangement for clamping the mounting portion to the support portion, the clamp arrangement having an open position in which the mounting portion is removable from the support portion, a closed position in which the mounting portion is fixed relative to the support portion, and a bearing position in which the mounting portion is rotatable relative to the support portion, wherein the clamp arrangement comprises a clamp member attached to the mounting portion and being rotatable relative to the mounting portion about a first axis in an actuation plane substantially perpendicular to the first axis, the clamp member having a bearing surface and an actuation point, the actuation point being in the actuation plane, an actuation ring arranged for rotation relative to the clamp member about a second axis substantially perpendicular to the first axis, a resilient member attached between the actuation ring and the actuation point of the clamp member, actuation means operable to rotate the actuation ring with respect to the clamp member, wherein, in the open position of the clamp, the actuation ring is positioned such that the resilient member extends in a direction to a first side of the actuation plane of the clamp member, and the clamp member is held by the resilient member in a first position in which the bearing surface does not engage the support portion, and in which the mounting portion is removable from the support portion, wherein, in the closed position of the clamp, the actuation ring is positioned such that the resilient member extends in a direction to a second side of the actuation plane of the clamp member, and the clamp member is held by the resilient member in a second position in which the bearing surface of the clamp member engages the support portion, such that the bearing surface is spaced apart from a reference point on the mounting portion by a first distance, and such that a predetermined clamping force is exerted on the support portion by the bearing surface, wherein, in the bearing position of the clamp, the actuation ring is positioned such that the resilient member extends in a direction to the second side of the actuation plane of the clamp member, and the clamp member is held by the resilient member such that the bearing surface is spaced apart from a reference point on the mounting portion by a second distance greater than the first distance, and such that the mounting portion is rotatable with respect to the support portion, and that the mounting portion is not removable from the support portion, wherein the actuation means are operable to rotate the actuation ring relative to the clamp member, thereby to move the clamp member between the open, closed and bearing positions.

The actuation means may be provided by any suitable arrangement of actuators of suitable types, such as hydraulic rams and/or lead screws.

In one example, the actuation means comprise a hydraulic ram operable to move the actuation ring between the open and closed positions, and between the closed and bearing positions.

In another example, the actuation means comprise a hydraulic ram operable to move the actuation ring between the open and closed positions, and between the closed and bearing positions, and a second resilient member arranged to urge the actuation ring toward the closed position.

Another example further comprises a variable position stop means which has a first position and a second position, the first position corresponding to the close position of the clamp and the second position corresponding to the open position of the clamp, In such an example, the actuation means comprise a hydraulic ram operable to move the actuation ring between the open and closed positions, and a third resilient member arranged to urge the clamp from the closed position to the bearing position, the position of the clamp in the closed and bearing positions being defined by the position of the variable position stop means.

The power generation unit may be buoyant, or may be heavy (i.e. not buoyant).

### BRIEF DESCRIPTION OF THE DRAWINGS

Figure 1 is a schematic view of a water current power generation system;
Figure 2 is a schematic drawing of a power generation unit for use in the system of Figure 1;
Figure 3 illustrates a connection between a power generation unit and a support structure of the system of Figure 1;
Figure 4 illustrates the connection of Figure 3 in more detail;
Figure 5 illustrates a clamp arrangement embodying the principles of the present invention suitable for use with the system of Figure 1;
Figures 6 to 8 illustrate a first example embodying the principles of the present invention;
Figures 9 to 14 illustrate a second example embodying the principles of the present invention;
Figure 15 illustrates schematically the operation of the actuator arrangements for use with the clamp arrangements shown in Figures 5 to 14;
Figure 16 illustrates schematically operation of an alternative actuator arrangement for use with the clamp arrangements shown in Figures 5 to 14; and
Figure 17 illustrates schematically operation of a second alternative actuator arrangement for use with the clamp arrangements shown in Figures 5 to 14.

### DETAILED DESCRIPTION OF THE PREFERRED EMBODIMENTS

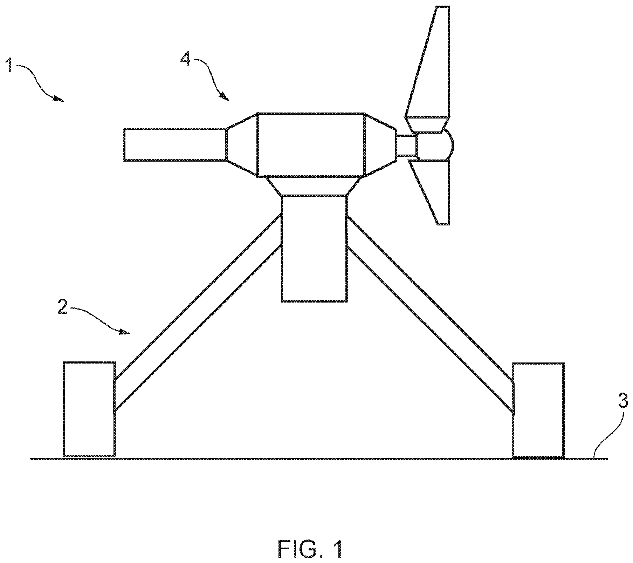

A water current power generation system 1 is shown in Figure 1 and comprises a support structure 2 located on a bed 3 of a body of water. A power generation unit 4, such as a turbine device, is mounted on the support structure 2. In this example, as the water current flows past the power generation unit 4, a rotor assembly turns, thereby driving an electrical generator, or other power converter apparatus, provided in the power generation unit 4. In one example, the power generation unit 4 is buoyant, and is winched down to the support structure 2.

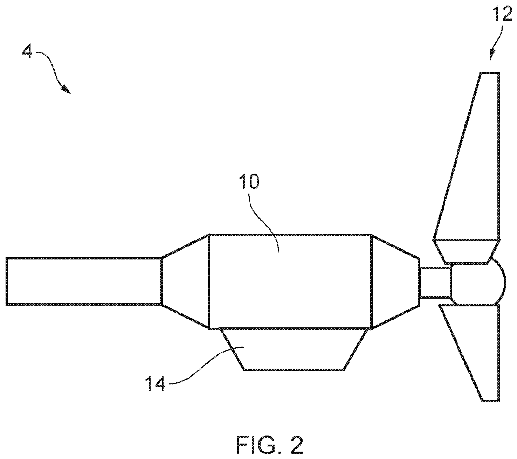

Figure 2 illustrates the power generation unit 4 of Figure 1 in more detail. The power generation unit 4 comprises a main body 10, on which is rotatably mounted a rotor assembly 12. The rotor assembly 12 operates to drive an electricity generator, or other power generation apparatus, housed in the main body 10. The power generation unit 4 is adapted for releasable mounting on the support structure 2, and includes a mount 14 to provide this releasable mounting.

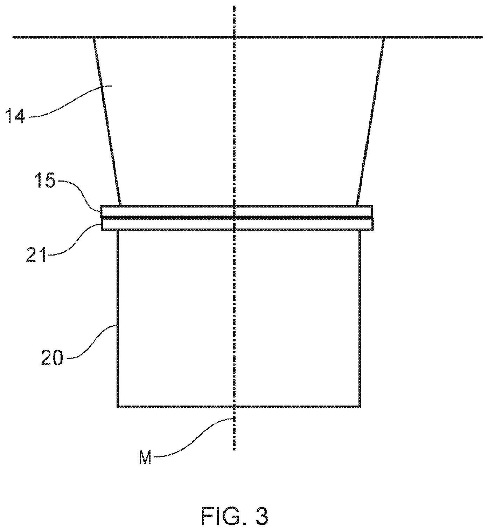

The attachment of the mount 14 to the support structure is shown in more detail in Figure 3. The main body 10, from which the engagement portion 14 extends, is not shown in Figure 3 for the sake of clarity. The mount 14 defines a mounting axis M for the power generating unit 4. In order that the power generation unit 4 is able to rotate with respect to the support structure 2, the mount 14 and the support housing 20 are circular in plan cross section.

The mount 14 has a mounting flange 15 which extends around an outer edge region of the mount 14, and which engages with an associated support flange 21 that extends around an outer edge region of the support housing 20. The mounting and support flanges 15 and 21 allow the power generation unit 4 to be affixed to the support structure 2 in an appropriate manner. Preferably, the power generation unit 4 is substantially rigidly fixed to the support structure 2 during power generation, and is rotatable with respect to the support structure 2 during a re-orientation procedure. Reorientation of the power generation unit 4 is required in order to align the unit into the tidal flow. Since the tidal flow changes direction regularly, as the tide changes, the power generation unit 4 will need reorientation with those changes in tidal flow direction. In contrast to wind turbines which have to track constant changes in wind direction, a tidal flow power generation unit needs only to be reoriented between two positions, since tidal sites have two dominant flow directions.

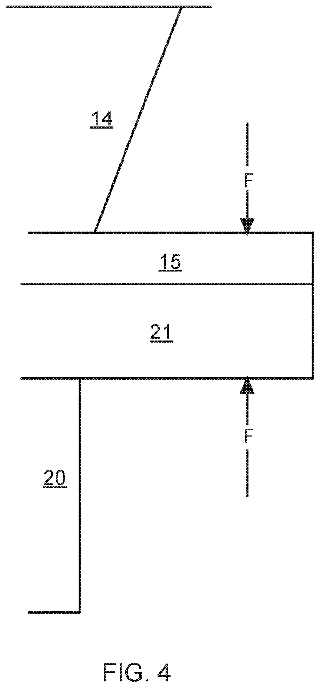

Figure 4 illustrates the clamping requirements for the system of Figure 1. As described above, the mount 14, is located on the support housing 20 by way of a mounting flange 15 engaging on a support flange 21. In order to secure the power generating apparatus 4 to the support structure 2, a clamping force F is required. The clamping force F serves to prevent the power generating apparatus separating from the support structure. In addition, the clamping force F must ensure that a frictional engagement between the mounting flange 15 and support flange 12 is sufficient to prevent rotation of the mounting flange 15 with respect to the support flange 21 (and hence prevent rotation of the power generating apparatus with respect to the support structure) during a power generating mode of operation of the system.

Furthermore, during reorientation of the power generating apparatus with respect to the support apparatus, it is necessary to reduce the frictional engagement between the two flanges 15 and 21, and this is achieved in embodiments of the present invention by moving the clamp to a bearing position. Where the power generation unit 4 is non-buoyant, then this action reduces the clamping force F. Where the power generation unit 4 is buoyant this clamp movement allows the power generation unit 4 to move away from the support structure, separating the mounting and support flanges 15 and 21 and allowing rotation of the unit 4 with respect to the support structure 2.

It will, therefore, be readily appreciated that during such a reorientation phase, the power generating apparatus must be prevented from separating from the support structure. As such, it is necessary to provide a clamping arrangement that has three positions - an open position in which the power generating apparatus is able to separate from the support structure, a closed position in which the power generating apparatus is prevented from separating from, and rotating with respect to, the support structure, and a bearing position in which the power generating apparatus is able to rotate with respect to the support structure, but is prevented from separating from the structure.

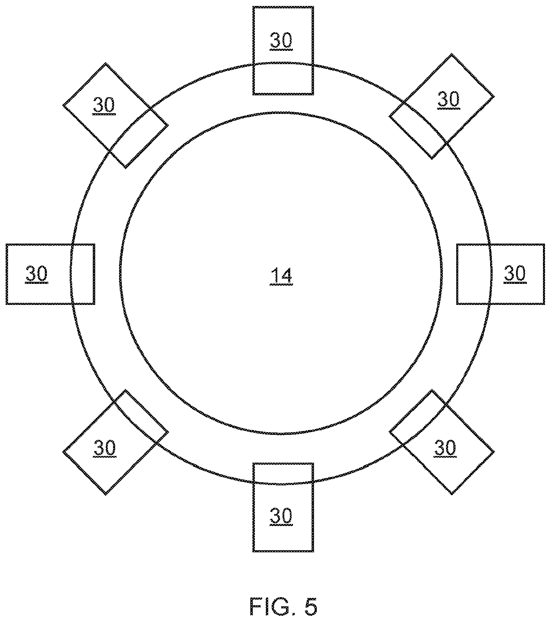

Figure 5 to 15 illustrate embodiments of the present invention which are able to provide a clamp mounted to hold the mounting flange 15 of the mount 14 to the support flange 21 of the support housing 20.

As shown in Figure 5, a clamp embodying the present invention comprises a plurality of clamping arrangements 30 arranged around the mounting flange 15. Any suitable number of clamping arrangements 30 may be provided and may be distributed in any suitable manner around the mounting flange 15. In one example, an even number of clamping arrangements 30 is provided and these arrangements 30 are evenly distributed around the mounting flange 15.

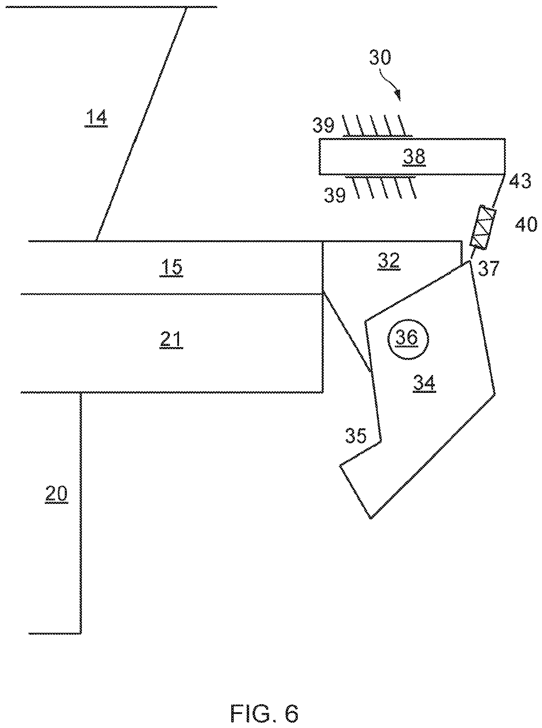

Figures 6 to 8 are side cross-sectional views of a first example clamping arrangement 30 embodying the present invention. As described, a clamp embodying the principles of the present invention makes use of a plurality of clamping arrangements. For the sake of clarity, only one clamping arrangement is shown in Figures 6 to 8. The clamping arrangement 30 comprises a support member 32 which, in this example, is attached to the mounting flange 15. The support member 32 may be provided by a single member or may be provided by a pair of members. A clamp member 34 is rotatably mounted on the support member 32 by way of a pivot 36, which defines a first axis of rotation. The clamp member 34 is rotatable about the first axis in an actuation plane substantially perpendicular to the first axis. The pivot may be provided by any suitable means, such as a pin, and may extend between the pair of support members where provided.

The clamp member 34 defines a bearing surface 35 at one end thereof. The bearing surface is arranged to be selectively engageable with a portion of the support flange 21. In the examples shown herein, the bearing surface 35 is arranged to engage with a surface of the support flange 21 opposite to the surface of the flange that engages with the mounting flange 15. Other configurations of engagement between the support flange 21 and bearing surface 35 are possible.

The clamp member 34 defines an actuation point 37 to which an actuation device is attached, as is described below. In the example shown, the actuation point 37 is to a different side of the pivot 36 to the bearing surface 35, such that movement of the actuation point 37 in a clockwise direction causes clamp member 34 to rotate clockwise (as shown in Figures 6 to 8), and so causes the bearing surface 35 to move clockwise towards engagement with the support flange 21. Similarly, anti-clockwise rotation (as shown in Figures 6 to 8) of the actuation point 37 causes the clamp member 34 to move anti-clockwise, thereby causing the bearing surface 35 to move anti-clockwise away from engagement with the support flange 21.

The clamp member has an open position, as shown in Figure 6, in which the bearing surface 35 is separated from the support flange 21, and in which the mount 14 is able to be removed from the support housing 20. In the position shown in Figure 6, it is possible to lift the whole power generation unit 4 from the support structure 3 when the unit 4 is non-buoyant, or to allow the unit 4 to float free of the support structure 2 when the unit 4 is buoyant. Figure 6 shows the position before the unit 4 is removed from the support structure 2.

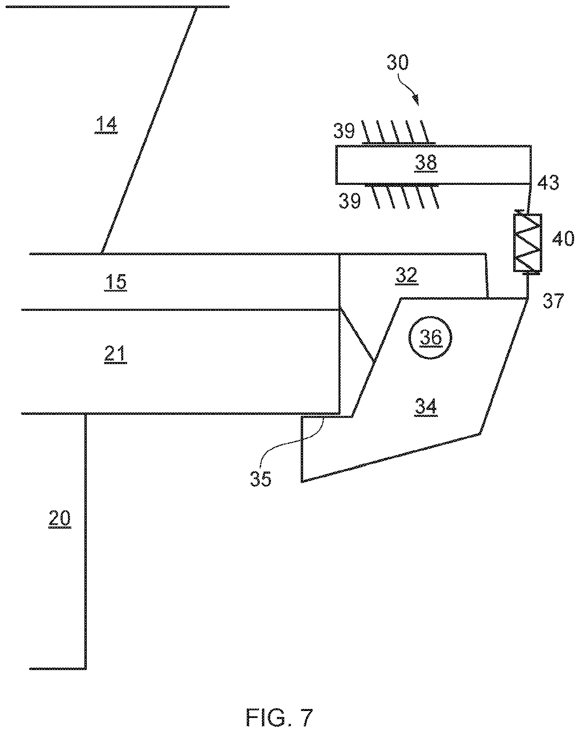

The clamp has a closed position, as shown in Figure 7, in which the bearing surface 35 is engaged with the support flange 21, with a clamping force sufficient to prevent rotation about the mounting axis M (due to frictional coupling of the bearing surface 35 and the support flange 21) of the mount 14 with respect to the support housing 20. In the closed position, the mount 14 is not removable from the support housing 20. The bearing surface 35 is spaced apart from a reference point on the mounting portion by a first distance.

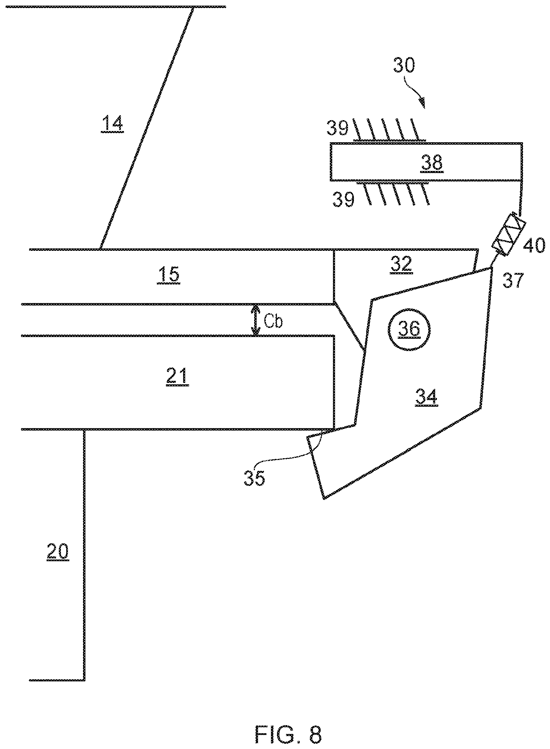

The clamp also has a bearing position, as shown in Figure 8, in which clamp member 34 is positioned such that the bearing surface 35 is spaced apart from the reference point on the mounting portion by a second distance, greater than the first distance. The clamp member 34 is positioned so that the bearing surface 35 still prevents removal of the power generation unit 4 from the support structure 2. When the power generation unit 4 is non-buoyant, this movement of the bearing surface 35 reduces the clamping force. As shown in Figure 6, when the power generation unit 4 is buoyant, then the unit 4 floats away from the support structure 2 until the bearing surface 35 is engaged with the support flange 21. The position of the clamp member 34 prevents the mounting flange 15 moving away from the support flange 21 by more than a predetermined distance Cb.

As will be described below in more detail, the clamp member 34 is movable between the open and closed positions, and between the closed and bearing positions. In order to move from the bearing position to the open position, the clamp member 34 must first move to the closed position.

In order to move the clamp member 34 between positions, an actuator arrangement is provided. The actuator arrangement comprises an actuation ring 38 which, in this example, extends around the mount 14. In a particular example, a single actuation ring is provided for actuation of a plurality of clamp members. In the example of Figures 6, 7 and 8, the actuation ring is supported by a support surface 39 which may be provided by any suitable means. For example, the support surface 39 may be provided by the mount 14, by the mounting flange 15 and/or by the support member 32. The actuation ring is arranged to be rotatable around the mount 14 whilst supported by the support surface 39. The actuation ring 38 is arranged to be rotated by an actuator about the mounting axis M, as is described below.

The clamp member 34 is connected with the actuation ring 38 by way of a clamp spring set 40. The clamp spring set 40 comprises at least one high force short stroke spring which extends between the actuation point of the clamp member 34 and a linkage point 43 on the actuation ring 38. Rotation of the actuation ring 38 changes the position of the linkage point 43 relative to the actuation point 37, which causes the clamp member 34 to rotate about pivot 36 due to the fixed maximum length of the clamp spring set 40. Operation of the actuator arrangement is described in more detail below.

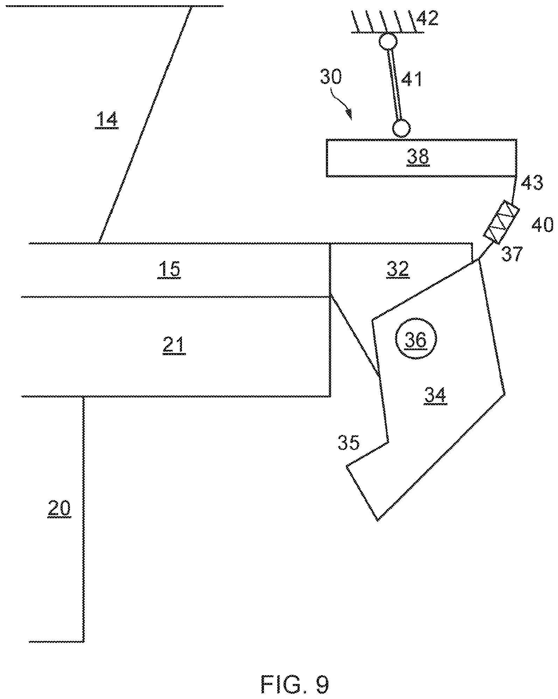

Figures 9, 10 and 11 illustrate a second example arrangement embodying the present invention which incorporates an alternative support for the actuation ring 38 in the open, closed and bearing positions respectively. In the embodiment shown in Figures 9, 10 and 11, the actuation ring 38 is supported by a plurality of support links 41 which suspend the actuation ring 38 from a support 42. The support 42 may be provided by any suitable part of the apparatus. The support links 42 are preferably connected with the actuation ring 38 and support 42 by way of respective spherical bearings in order to allow the actuation ring to rotate with respect to the mount 14 and the mounting flange 15. In other respects the arrangement shown in Figures 9, 10 and 11 is the same as that shown in Figure 6, 7 and 8.

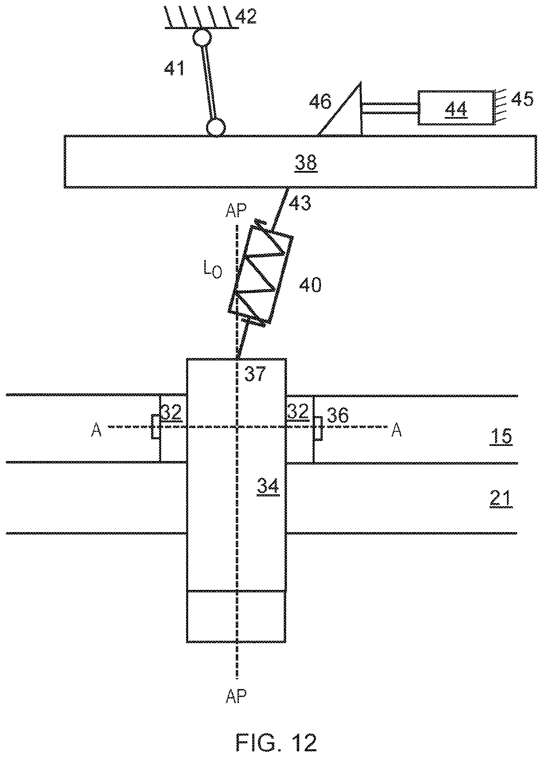

Operation of the clamping arrangement 30 will now be described with reference to Figure 12, 13 and 14. The example shown in Figures 12, 13 and 14 makes use of the actuation ring support of the example of Figures 9, 10 and 11, but the operations described apply equally to the example of Figure 6, 7 and 8.

Figure 12 illustrates an end view of a clamping arrangement 30, as viewed from radially outside of the arrangement 30. In this example, the clamp member 34 is supported on the pivot 36 between a pair of support members 32. The pivot 36 defines the first axis A-A about which the clamp member 34 rotates in the actuation plane AP-AP.

The open position shown in Figure 12 corresponds to that shown in Figure 6 and 9.

An actuator 44 is arranged between a fixed stop 45 and an engagement portion 46 of the actuation ring 38. The fixed stop 45 may be provided by any suitable part of the arrangement or power generating apparatus. The engagement portion 46 is rigidly affixed to the ring 38, such that movement of the engagement portion 46 causes rotation of the actuation ring 38 with respect to the clamp member 34 and flange 15. The actuator may be provided by any suitable means, such as a hydraulic ram, and/or a lead screw.

In embodiments of the present invention, the actuator 44 is operable to move the clamp member 34 between the open position and the closed position, and between the closed position and the bearing position. That is, the bearing position is only accessible from the closed position, and this increases the safety of the clamp, since it is not possible to move directly from the bearing position to the open position.

In the open position of Figure 12, the distance Lo between the actuation point 37 of the clamp member 34, and the linkage point 43 of the actuation ring 38 is such that the clamp spring set 40 provides a longitudinal force acting to urge the actuation point 37 towards the linkage point 43. As such, the clamp member 34 is rotated about the pivot 36 so that the bearing surface 35 is not in engagement with the support flange 21, and so that the mount 14 is removable from the support housing 20. The longitudinal force exerted by the clamp spring set 40 on the clamp member 34 holds the clamp member 34 in the open position. The clamp spring set 40 extends in a direction to a first side of the actuation plane AP-AP of the clamp member 34.

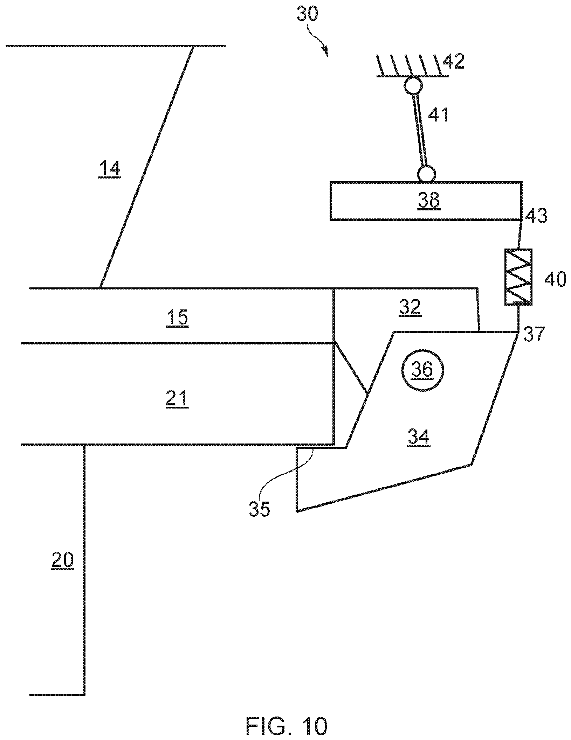

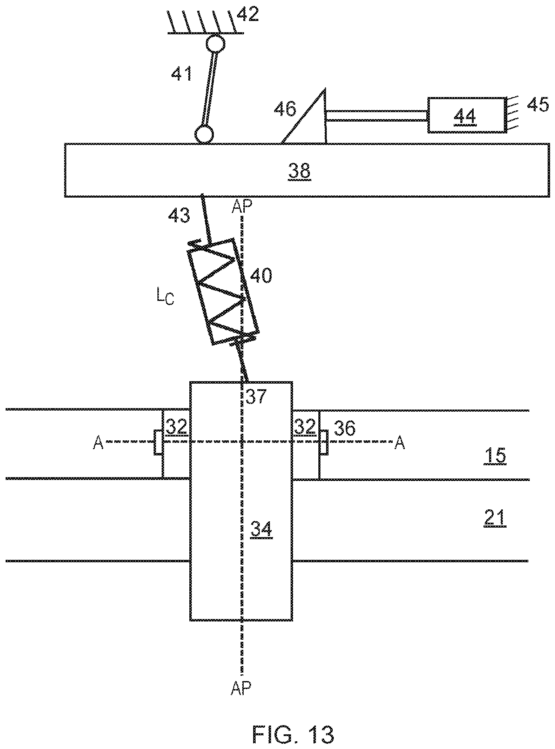

In order to move to the closed position shown in Figure 13 (corresponding to Figures 7 and 10), the actuator 44 is operated to move the engagement portion 46 away from the fixed stop 45, thereby rotating the actuation ring 38 with respect to the mounting flange 15. This rotation of the actuation ring 38 causes the linkage point 43 to move such that the clamp 34 is rotated about the first axis A-A until the bearing surface 35 engages with the support flange 21. The actuator operates to move the actuation ring further so that the linkage point is moved through the actuation plane AP-AP of the clamp member 34, thereby causing the clamp spring set 40 to move through a centre point to an over centre position. Since the bearing surface 35 of the clamp member 34 is engaged with the support flange 21, the distance between the actuation point of the clamp 34 and the actuation ring 38 is fixed. This distance is chosen such that, as the clamp spring set 40 moves through the centre point, the spring set 40 is compressed. This compression ensures that a predetermined minimum force must be exerted on the actuation ring 38 for the clamp arrangement to reach the closed position.

In order to return to the open position of Figure 12, the actuation ring 38 must be moved with sufficient force to overcome the compression of the spring set 40 at the centre point. This arrangement increases the safety of the clamp, since the minimum force required can be set to a desirably high level which can only be achieved by operation of the actuator 44.

In the closed position of Figure 13 the distance Lc between the actuation point 37 and the linkage point 43 is such that the spring set 40 exerts a longitudinal force on the actuation point 37 of the clamp member 34 such that the bearing surface 35 is held in engagement with the support flange 21 with sufficient force to prevent rotation of the mounting flange 15 with respect to the support flange 21. The longitudinal force is determined by the amount of compression imposed upon the spring set 40. This compression is determined by the position of the actuation ring 38, since this position sets the distance Lc.

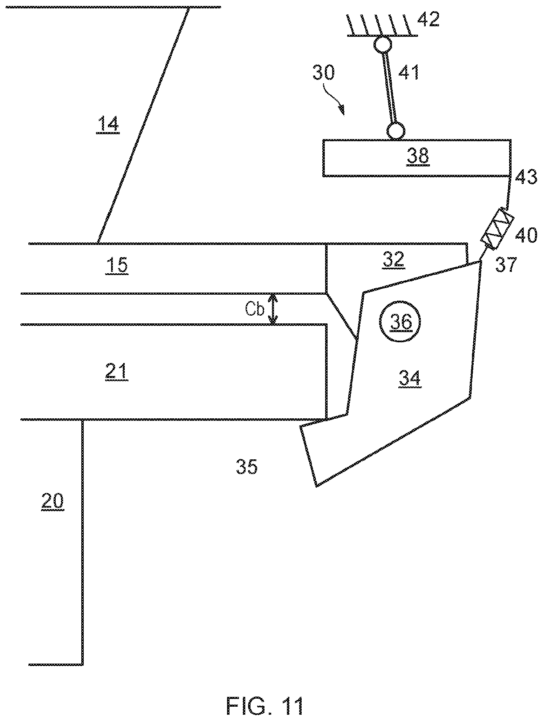

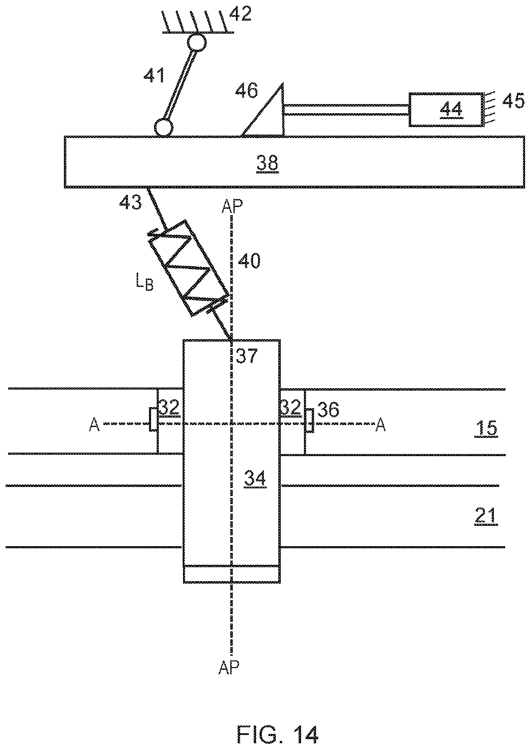

The bearing position of the clamp arrangement 30 is shown in Figure 14, and corresponds to the positions shown in Figures 8 and 11. In order to move from the closed position to the bearing position, the actuator 44 is operated to move the engagement portion 46 further away from the fixed stop 45. In doing so, the distance Lb between the actuation point 37 and the linkage point 43 is increased, thereby reducing the amount of compression of the spring set 40. This reduction in compression reduces the longitudinal force exerted on the actuation point 37 of the clamp member 34. This reduces the clamping force exerted on the support flange 21 by the bearing surface 35 of the clamp member 34 to a predetermined level suitable to allow rotation of the mounting flange 15 with respect to the support flange 21. In the case of a buoyant power generation unit, where it is desired to allow the mounting flange 15 to separate from the support flange 21, the distance Lb is such that there is no compression in the spring set 40, and the clamp member 34 is rotated about the first axis, such that the bearing surface 35 moves away from the mounting flange 15. In order to return the closed position, the actuator 44 is operated to pull the engagement portion 46 towards the fixed stop 45, thereby rotating the actuation ring 38 with respect to the mounting flange 15. The linkage point 43 returns to the closed position, which in turn returns the clamp member 34 to the closed position with the bearing surface engaged with the support flange 21 and the support flange 21 engaged with the mounting flange 15.

It will, therefore, be readily appreciated that a clamp arrangement embodying the principles of the present invention provides a three position clamp with enhanced safety, since the open position cannot be reached without passing through an over centre position of the clamp components. Such movement requires a predetermined force level which is unlikely to be achieved accidentally. In addition, in order to move from the closed position to the bearing position, the actuator must operate in a direction opposite to that required for moving from the closed position to the open position.

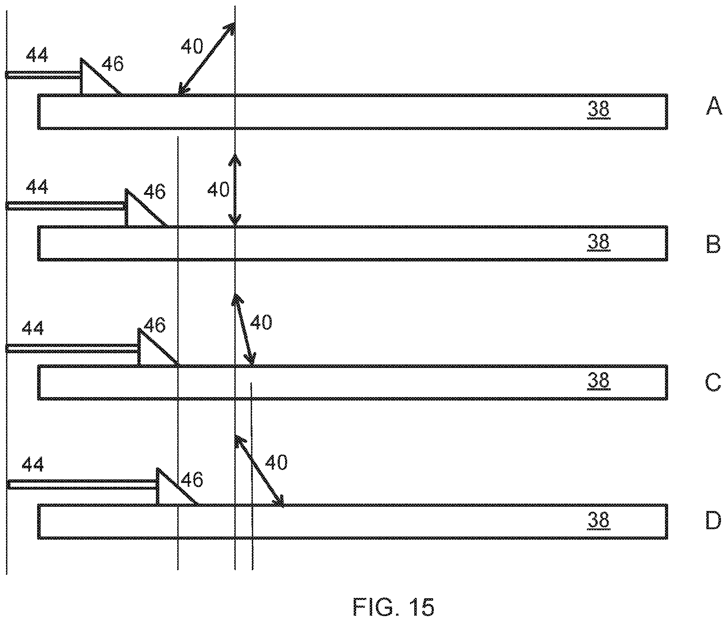

Figure 15 illustrates the operation of the clamp arrangement in schematic form. In position A, the open position, the actuator 44 is fully retracted and the spring set 40 is slightly extended in order to hold the clamp member in the open position. As the clamp is moved by the actuator 44 to the closed position (position C), it passes through a closing position (B) in which the spring set 40 is compressed to the greatest extent.

In the closed position (C), the spring set 40 is slightly relaxed from the maximum compression position (B) such that the clamp member is held in the closed position. This closed position is an over-centre position - as such the direction of action of the spring set 40 has a component in the opposite direction to the direction from the closed position to the open position. As such, in order to move the clamp arrangement from the closed position to the open position it is necessary to overcome the spring force of the spring set. The actuator 44 is then extended further in order that the clamp arrangement is moved to the bearing position (D) in which the compression in the spring set 40 is further relaxed.

It will be appreciated that the actuator 44 may be arranged such that it is fully extended when the clamp arrangement is in the open position, partially retracted in the closed position and further retracted in the bearing position. It will be readily appreciated that any suitable actuator arrangement may provide the required movement of the actuation ring 38.

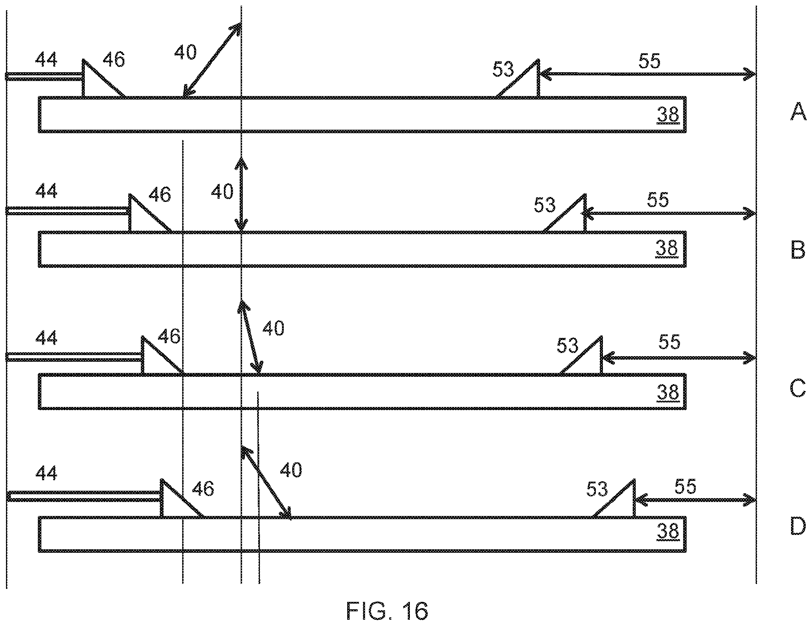

An alternative arrangement is shown schematically in Figure 16 and includes an additional spring set 55 which acts between a fixed point 54 and an engagement portion 53 on the actuation ring 38. The engagement portion 53 may be provided by a distinct portion as shown in the example of Figure 16, or may be provided by another part of the arrangement, such as the actuator 44 or the engagement portion 46. The additional spring set operates to urge the clamp mechanism from the bearing position to the closed position, in the event of failure of the actuator 44.

In position A, the open position, the actuator 44 is fully retracted and the spring set 40 is slightly extended in order to hold the clamp member in the open position the additional spring set 55 is fully extended. As the actuator 44 moves the clamp to the closed position (position C), it passes through a closing position (B) in which the spring set 40 is compressed to the greatest extent.

In the closed position (C), the spring set 40 is slightly relaxed from the maximum compression position (B) such that the clamp member is held in the closed position. The additional spring set 55 is slightly compressed.

The actuator 44 is then extended further in order that the clamp arrangement is moved to the bearing position (D) in which the compression in the spring set 40 is further relaxed. The additional spring set 55 is at the point of greatest compression, and so imparts a force on the actuation ring 38 in a direction to return the clamp to the closed position (C).

Once again, it will be appreciated that the actuator 44 may be arranged such that it is fully extended when the clamp arrangement is in the open position, partially retracted in the closed position and further retracted in the bearing position.

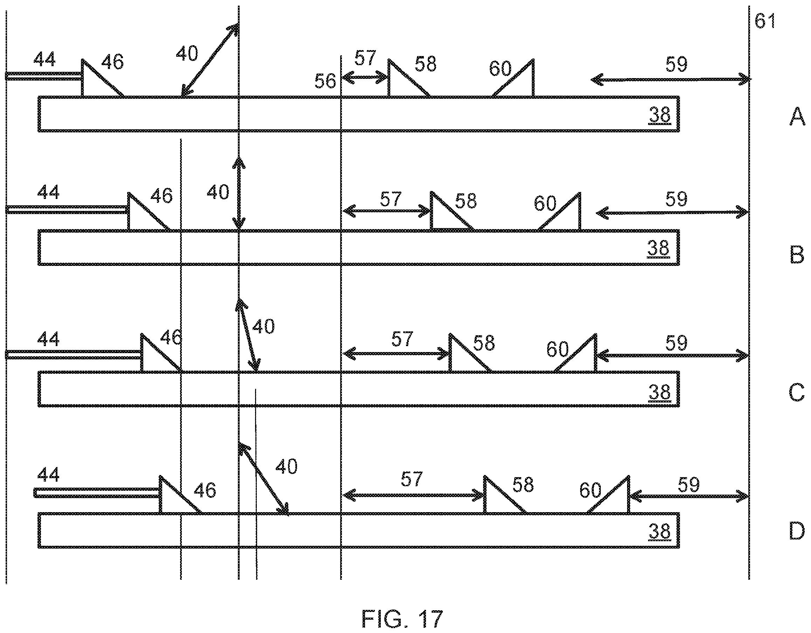

A second alternative arrangement is shown schematically in Figure 17 and includes a second actuator 57, which operates between a fixed point 56 and a second engagement portion 58 attached to the actuation ring 38. The second actuator 57 may be provided by a low force long stroke spring, or by any other suitable means. The second alternative arrangement also includes a variable position stop means 59 which engages with a stop portion 60 attached to the actuation ring 38. The variable position stop means may be provided by a lead screw or any suitable device.

In position A, the open position, the actuator 44 is fully retracted and the spring set 40 is slightly extended in order to hold the clamp member 34 in the open position. The second actuator 57 is compressed, and the variable position stop means 59 is set to a position corresponding to the closed position of the clamp.

As the clamp is moved by the actuator 44 to the closed position (position C), it passes through a closing position (B) in which the spring set 40 is compressed to the greatest extent. The compression in the second actuator 57 relaxes somewhat.

In the closed position (C), the spring set 40 is slightly relaxed from the maximum compression position (B) such that the clamp member 34 is held in the closed position. The actuator 44 is fully extended in the closed position. This simplifies the control system needed for positioning the actuator 44 correctly. In this position the second actuator 57 is compressed somewhat, thereby urging the actuation ring 38 such that the stop portion 60 engages the variable position stop means 59. The clamp member is then held in the closed position (C).

In order to reach the bearing position, the variable position stop means is retracted to the position shown in position D, which allows the second actuator to urge the actuation ring to the bearing position (D). The actuator 44 is provided with a variable mounting, such as a slotted mounting, which allows the actuator 44 to move further whilst fully extended in order that the clamp arrangement is moved to the bearing position (D). In the bearing position (D) the compression in the spring set 40 is further relaxed.

## Claims

1. An underwater power generating system (1) comprising a power generating apparatus (4) and a support structure (2), the power generating apparatus (4) having a mounting portion (14) which is releasably engageable with a support portion (20) of the support structure (2), the system (1) further comprising a clamp arrangement (30) for clamping the mounting portion (14) to the support portion (20), the clamp arrangement (30) having an open position in which the mounting portion (14) is removable from the support portion (20), a closed position in which the mounting portion (24) is fixed relative to the support portion (20), and a bearing position in which the mounting portion (14) is rotatable relative to the support portion (20), wherein the clamp arrangement (30) comprises:
a clamp member (34) attached to the mounting portion (14) and being rotatable relative to the mounting portion (14) about a first axis in an actuation plane substantially perpendicular to the first axis, the clamp member (34) having a bearing surface (35) and an actuation point (37), the actuation point (37) being in the actuation plane;
an actuation ring (38) arranged for rotation relative to the clamp member (34) about a second axis substantially perpendicular to the first axis;
a resilient member (40) attached between the actuation ring (38) and the actuation point (37) of the clamp member (34);
actuation means operable to rotate the actuation ring (38) with respect to the clamp member (34),
wherein, in the open position of the clamp, the actuation ring (38) is positioned such that the resilient member (40) extends in a direction to a first side of the actuation plane of the clamp member (34), and the clamp member (34) is held by the resilient member (40) in a first position in which the bearing surface (35) does not engage the support portion (20), and in which the mounting portion (14) is removable from the support portion (20),
wherein, in the closed position of the clamp, the actuation ring (38) is positioned such that the resilient member (40) extends in a direction to a second side of the actuation plane of the clamp member (34), and the clamp member (34) is held by the resilient member (40) in a second position in which the bearing surface (35) of the clamp member (34) engages the support portion (20), such that the bearing surface (35) is spaced apart from a reference point on the mounting portion (14) by a first distance, and such that a predetermined clamping force is exerted on the support portion (20) by the bearing surface (35),
wherein, in the bearing position of the clamp, the actuation ring (38) is positioned such that the resilient member (40) extends in a direction to the second side of the actuation plane of the clamp member (34), and the clamp member (34) is held by the resilient member (40) such that the bearing surface (35) is spaced apart from a reference point on the mounting portion (14) by a second distance greater than the first distance, and such that the mounting portion (14) is rotatable with respect to the support portion (20), and that the mounting portion (14) is not removable from the support portion (20),
wherein the actuation means are operable to rotate the actuation ring (38) relative to the clamp member (34), thereby to move the clamp member (34) between the open, closed and bearing positions.

2. A power generating system (1) as claimed in claim 1, wherein the actuation means comprise a hydraulic ram operable to move the actuation ring (38) between the open and closed positions, and between the closed and bearing positions.

3. A power generating system (1) as claimed in claim 1, wherein the actuation means comprise a hydraulic ram operable to move the actuation ring (38) between the open and closed positions, and between the closed and bearing positions, and a second resilient member arranged to urge the actuation ring (38) toward the closed position.

4. A power generating system (1) as claimed in claim 1, further comprising a variable position stop means (59) which has a first position and a second position, the first position corresponding to the close position of the clamp and the second position corresponding to the open position of the clamp, wherein the actuation means comprise a hydraulic ram operable to move the actuation ring (38) between the open and closed positions, and a third resilient member arranged to urge the clamp from the closed position to the bearing position, the position of the clamp in the closed and bearing positions being defined by the position of the variable position stop means (59).

5. A power generating system (1) as claimed in any one of claims 1 to 4, wherein the power generation unit is buoyant.

## Patentansprüche

1. Unterwasser-Stromerzeugungssystem (1), umfassend eine Stromerzeugungsvorrichtung (4) und eine Tragstruktur (2), wobei die Stromerzeugungsvorrichtung (4) einen Montageabschnitt (14) hat, der mit einem Tragabschnitt (20) der Tragstruktur (2) entfernbar in Eingriff bringbar ist, wobei das System (1) ferner eine Klemmanordnung (30) zum Klemmen des Montageabschnitts (14) an dem Tragabschnitt (20) umfasst, wobei die Klemmanordnung (30) eine offene Position, in der der Montageabschnitt (14) von dem Tragabschnitt (20) entfernbar ist, eine geschlossene Position, in der der Montageabschnitt (24) relativ zu dem Tragabschnitt (20) feststehend ist, und eine Lagerposition, in der der Montageabschnitt (14) relativ zu dem Tragabschnitt (20) drehbar ist, hat, wobei der Klemmabschnitt (30) Folgendes umfasst:
ein Klemmelement (34), das an dem Montageabschnitt (14) angebracht und relativ zu dem Montageabschnitt (14) um eine erste Achse in einer Betätigungsebene drehbar ist, die im Wesentlichen senkrecht zu der ersten Achse ist, wobei das Klemmelement (34) eine Lagerfläche (35) und einen Betätigungspunkt (37) hat, wobei der Betätigungspunkt (37) in der Betätigungsebene ist,
einen Betätigungsring (38), der zur Drehung relativ zu dem Klemmelement (34) um eine zweite Achse, die im Wesentlichen senkrecht zu der ersten Achse ist, angeordnet ist,
ein elastisches Element (40), das zwischen dem Betätigungsring (38) und dem Betätigungspunkt (37) des Klemmelements (34) angebracht ist,
Betätigungsmittel, die betreibbar sind, um den Betätigungsring (38) in Bezug auf das Klemmelement (34) zu drehen,
wobei, in der offenen Position der Klemme, der Betätigungsring (38) derart positioniert ist, dass sich das elastische Element (40) in eine Richtung zu einer ersten Seite der Betätigungsebene des Klemmelements (34) erstreckt und das Klemmelement (34) durch das elastische Element (40) in einer ersten Position gehalten wird, in der die Lagerfläche (35) mit dem Tragabschnitt (20) nicht in Eingriff steht und in der der Montageabschnitt (14) von dem Tragabschnitt (20) entfernbar ist,
wobei, in der geschlossenen Position der Klemme, der Betätigungsring (38) derart positioniert ist, dass sich das elastische Element (40) in eine Richtung zu einer zweiten Seite der Betätigungsebene des Klemmelements (34) erstreckt und das Klemmelement (34) durch das elastische Element (40) in einer zweiten Position gehalten wird, in der die Lagerfläche (35) des Klemmelements (34) mit dem Tragabschnitt (20) derart in Eingriff steht, dass die Lagerfläche (35) von einem Referenzpunkt auf dem Montageabschnitt (14) um einen ersten Abstand beabstandet ist, und derart, dass eine vorbestimmte Klemmkraft auf den Tragabschnitt (20) durch die Lagerfläche (35) ausgeübt wird,
wobei, in der Lagerposition der Klemme, der Betätigungsring (38) derart positioniert ist, dass sich das elastische Element (40) in eine Richtung zu der zweiten Seite der Betätigungsebene des Klemmelements (34) erstreckt und das Klemmelement (34) durch das elastische Element (40) derart gehalten wird, dass die Lagerfläche (35) von einem Referenzpunkt auf dem Montageabschnitt (14) um einen zweiten Abstand beabstandet ist, der größer ist als der erste Abstand, und derart, dass der Montageabschnitt (14) in Bezug auf den Tragabschnitt (20) drehbar ist und dass der Montageabschnitt (14) von dem Tragabschnitt (20) nicht entfernbar ist,
wobei die Betätigungsmittel betreibbar sind, um den Betätigungsring (38) relativ zu dem Klemmelement (34) zu drehen, wodurch das Klemmelement (34) zwischen der offenen, geschlossenen und Lagerposition bewegt wird.

2. Stromerzeugungssystem (1) nach Anspruch 1, wobei die Betätigungsmittel einen hydraulischen Stoßheber umfassen, der betreibbar ist, um den Betätigungsring (38) zwischen der offenen und geschlossenen Position und zwischen der geschlossenen und Lagerposition zu bewegen.

3. Stromerzeugungssystem (1) nach Anspruch 1, wobei das Betätigungsmittel einen hydraulischen Stoßheber, der betreibbar ist, um den Betätigungsring (38) zwischen der offenen und geschlossenen Position und zwischen der geschlossenen und Lagerposition zu bewegen, und ein zweites elastisches Element, das angeordnet ist, um den Betätigungsring (38) hin zu der geschlossenen Position zu zwingen, umfassen.

4. Stromerzeugungssystem (1) nach Anspruch 1, ferner umfassend ein Anschlagmittel (59) mit variabler Position, das eine erste Position und eine zweite Position hat, wobei die erste Position der geschlossenen Position der Klemme entspricht und die zweite Position der offenen Position der Klemme entspricht, wobei die Betätigungsmittel einen hydraulischen Stoßheber, der betreibbar ist, um den Betätigungsring (38) zwischen der offenen und geschlossenen Position zu bewegen, und ein drittes elastisches Element, das angeordnet ist, um die Klemme von der geschlossenen Position zu der Lagerposition zu zwingen, umfassen, wobei die Position der Klemme in der geschlossenen und Lagerposition durch die Position des Anschlagmittels (59) mit variabler Position definiert ist.

5. Stromerzeugungssystem (1) nach einem der Ansprüche 1 bis 4, wobei die Stromerzeugungseinheit schwimmend ist.

## Revendications

1. Système de génération d'énergie sous-marin (1) comprenant un appareil de génération d'énergie (4) et une structure de support (2), l'appareil de génération d'énergie (4) ayant une portion de montage (14) qui peut venir en prise de manière libérable avec une portion de support (20) de la structure de support (2), le système (1) comprenant en outre un agencement de pince (30) pour serrer la portion de montage (14) sur la portion de support (20), l'agencement de pince (30) ayant une position ouverte dans laquelle la portion de montage (14) peut être retirée de la portion de support (20), une position fermée dans laquelle la portion de montage (24) est fixe par rapport à la portion de support (20), et une position d'appui dans laquelle la portion de montage (14) est rotative par rapport à la portion de support (20), dans lequel l'agencement de pince (30) comprend :
un élément de pince (34) fixé à la portion de montage (14) et étant rotatif par rapport à la portion de montage (14) autour d'un premier axe dans un plan d'actionnement sensiblement perpendiculaire au premier axe, l'élément de pince (34) ayant une surface d'appui (35) et un point d'actionnement (37), le point d'actionnement (37) étant dans le plan d'actionnement ;
une bague d'actionnement (38) agencée pour une rotation par rapport à l'élément de pince (34) autour d'un second axe sensiblement perpendiculaire au premier axe ;
un élément élastique (40) fixé entre la bague d'actionnement (38) et le point d'actionnement (37) de l'élément de pince (34) ;
des moyens d'actionnement pouvant fonctionner pour mettre en rotation la bague d'actionnement (38) relativement à l'élément de pince (34),
dans lequel, en position ouverte de la pince, la bague d'actionnement (38) est positionnée de sorte que l'élément élastique (40) s'étende dans une direction jusqu'à un premier côté du plan d'actionnement de l'élément de pince (34), et l'élément de pince (34) est maintenu par l'élément élastique (40) dans une première position dans laquelle la surface d'appui (35) ne vient pas en prise avec la portion de support (20), et dans laquelle la portion de montage (14) peut être retirée de la portion de support (20),
dans lequel, en position fermée de la pince, la bague d'actionnement (38) est positionnée de sorte que l'élément élastique (40) s'étende dans une direction jusqu'à un second côté du plan d'actionnement de l'élément de pince (34), et l'élément de pince (34) est maintenu par l'élément élastique (40) dans une seconde position dans laquelle la surface d'appui (35) de l'élément de pince (34) vient en prise avec la portion de support (20), de sorte que la surface d'appui (35) soit espacée d'un point de référence sur la portion de montage (14) d'une première distance, et de sorte qu'une force de serrage prédéterminée soit exercée sur la portion de support (20) par la surface d'appui (35),
dans lequel, en position d'appui de la pince, la bague d'actionnement (38) est positionnée de sorte que l'élément élastique (40) s'étende dans une direction jusqu'au second côté du plan d'actionnement de l'élément de pince (34), et l'élément de pince (34) est maintenu par l'élément élastique (40) de sorte que la surface d'appui (35) soit espacée d'un point de référence sur la portion de montage (14) d'une seconde distance supérieure à la première distance, et de sorte que la portion de montage (14) soit rotative relativement à la portion de support (20), et que la portion de montage (14) ne puisse pas être retirée de la portion de support (20),
dans lequel les moyens d'actionnement peuvent fonctionner pour mettre en rotation la bague d'actionnement (38) par rapport à l'élément de pince (34), pour ainsi déplacer l'élément de pince (34) entre les positions ouverte, fermée et d'appui.

2. Système de génération d'énergie (1) selon la revendication 1, dans lequel les moyens d'actionnement comprennent un bélier hydraulique pouvant fonctionner pour déplacer la bague d'actionnement (38) entre les positions ouverte et fermée, et entre les positions fermée et d'appui.

3. Système de génération d'énergie (1) selon la revendication 1, dans lequel les moyens d'actionnement comprennent un bélier hydraulique pouvant fonctionner pour déplacer la bague d'actionnement (38) entre les positions ouverte et fermée, et entre les positions fermée et d'appui, et un deuxième élément élastique agencé pour forcer la bague d'actionnement (38) vers la position fermée.

4. Système de génération d'énergie (1) selon la revendication 1, comprenant en outre un moyen d'arrêt en position variable (59) qui a une première position et une seconde position, la première position correspondant à la position fermée de la pince et la seconde position correspondant à la position ouverte de la pince, dans lequel les moyens d'actionnement comprennent un bélier hydraulique pouvant fonctionner pour déplacer la bague d'actionnement (38) entre les positions ouverte et fermée, et un troisième élément élastique agencé pour forcer la pince de la position fermée à la position d'appui, la position de la pince dans les positions fermées et d'appui étant définie par la position du moyen d'arrêt à position variable (59).

5. Système de génération d'énergie (1) selon l'une quelconque des revendications 1 à 4, dans lequel l'unité de génération d'énergie est flottante.
